# EUROPEAN PATENT APPLICATION

(11) **EP 2 325 748 A1**
(43) Date of publication of application: **25.05.2011**
(21) Application number: 10156124.9
(22) Date of filing: 10.03.2010
(51) Int. Cl.: G06F 9/46, G06F 9/50

(54) **Industrial automation system architecture**

(30) Priority: 23.10.2009 EP 09173973
(71) Applicant: ABB Research Ltd., 8050 Zürich (CH)
(72) Inventor: Husain, Bazmi, 8032, Zürich (CH); Ganz, Christopher, 8046, Zürich (CH); Naedele, Martin, 8050, Zürich (CH); Schierholz, Ragnar, 4052, Basel (CH); Wahler, Michael, 8055, Zürich (CH); Richter, Stefan, 5600 Lenzburg (CH)
(74) Representative: ABB Patent Attorneys

(57) **Abstract**

According to the invention, a system architecture, or structure, is provided for an industrial automation system for controlling an industrial process. The automation system comprises a plurality of controllers forming a heterogeneous network of physical computing nodes interconnected via a communication network. Software applications that provide control system functionality on behalf of the industrial process consists of one or several distinct software components that are separated from each other in two dimensions, *time* and *space.* Time separation means that the processes or tasks of a component are assigned a sufficient share of CPU time, while space separation means that they are assigned a sufficiently large share of the memory and can access their own data only. On each of the plurality of controllers, a Location-Independence Layer (LIL) is instantiated as an exclusive interface or abstraction layer between the software applications and any further lower-level software, middleware, or operating system. The LIL provides for logical communication channels as abstract inter-component communication entities through which two or more software components exchange data on an exclusive basis. The channels rely on different physical mechanisms such as shared memory, message passing, or network packets to transmit data between components. For a given logical channel, the specific mechanism may change at any time, and certainly does so when a component is moved to a different piece of controller hardware.

## Description

### FIELD OF THE INVENTION

The invention relates to the field of industrial automation systems for monitoring and controlling industrial processes, and specifically to an architecture or structure of such an automation system.

### BACKGROUND OF THE INVENTION

Industrial automation systems are used extensively to protect, control and monitor industrial processes in industrial plants for e.g. manufacturing goods, transforming substances, or generating power, as well as to monitor and control distributed primary systems like electric power, water or gas supply systems or telecommunication systems, including their respective substations. An industrial automation system generally has a large number of process controllers distributed in an industrial plant or over a distributed primary system. Redundancy requirements further add to the demand for large amounts of computing resources in industrial automation systems. On the other hand, process controllers such as control and field devices represent a major cost driver in automation systems.

Industrial automation systems have been continuously optimized to increase efficiency and minimize down-time. Such systems typically have a long operation time (up to 30 years) and high availability requirements. The software (the control applications) on such systems is typically never updated during its lifetime, which implies that the hardware (the controllers) evolves faster than the software. However, the preponderant availability requirement, e.g. for an electric power distribution substation supplying electricity to consumers, prevents a shut-down of the automation system, and incidentally of the controlled industrial process, for the sole purpose of exchanging hardware. This excludes owners from taking advantage of recent improvements in commercially available hardware and leads to outdated hardware being used in many automation systems, which in turn complicates servicing in case of a future failure.

Computing demands of control and field devices vary over time so that currently hardware has to be dimensioned for peak loads and worst-case redundancy scenarios. This leads to low utilization of the provided hardware resources for a majority of the automation system's lifetime.

US 2008/0208361 A1 discloses a solution for efficient computing load allocation within an industrial automation environment. So-called dynamic load balancing dynamically allocates a computing load to a plurality of remotely distributed controllers on which virtual controller engine instances execute. A balancer component can receive data related to a load and/or a controller to enable dynamic adjustment of load distribution. The balancer component can evaluate data associated with a load within an industrial automation environment and/or a controller within the industrial automation environment in order to allocate a portion of the load to one or more controllers to optimize performance. The balance component can self-adjust distribution of a portion of the load within the industrial automation environment in real-time without user intervention.

### DESCRIPTION OF THE INVENTION

It is an object of the invention to allow adding and/or removing automation system hardware without disrupting the operation of the automation system and any industrial process controlled by the latter. The object is achieved by a system architecture for an industrial automation system according to claim 1. Advantageous embodiments of the invention are indicated in the dependent claims.

According to the invention, a system architecture, or structure, is provided for an industrial automation system for controlling an industrial process. The automation system comprises a plurality of controllers forming a heterogeneous network of physical computing nodes interconnected via a communication network. The plurality of controllers represents the computing hardware and includes servers, control devices, and instruments or field devices. Software applications provide control system functionality on behalf of the industrial process, such as plant control, diagnostics and optimization, by executing a number of application-level processes or tasks. Each software application in turn consists of one or several distinct software components that can be executed as processes or tasks that are separated from each other in two dimensions, *time* and *space.* Time separation means that the processes or tasks of a component are assigned a sufficient share of CPU time, while space separation means that they are assigned a sufficiently large share of the memory and can access their own data only. Time and space separation ensure that the execution of critical processes or tasks of one component are never jeopardized by other processes of other components claiming or occupying too many resources. On each of the plurality of controllers, a Location-Independence Layer (LIL) is instantiated as an exclusive interface or abstraction layer between the software applications and any further lower-level software, middleware, or operating system. The LIL provides for logical communication channels as abstract inter-component communication entities through which two or more software components exchange data on an exclusive basis. The channels rely on different physical mechanisms such as shared memory, message passing, or network packets to transmit data between components. A specific mechanism is automatically chosen by the LIL and is transparent to the components, i.e., the components are unaware of how they physically communicate with each other. For a given logical channel, the specific mechanism may change at any time, and certainly does so when a component is moved to a different piece of controller hardware.

In more detail, there are several, both local and remote communication mechanisms, which distinguish from each other in performance, safety, security, and determinism. A trade-off between these four criteria is made when choosing a specific mechanism. This provides for a high degree of flexibility in assigning the software components, such that the software applications no longer need to be executed on a single physical controller, and may even be distributed across controllers of different controller types. The logical communication channels can be dynamically mapped to concrete mechanisms at runtime, i.e. while the system is in operation. Accordingly, a component may even be moved dynamically across physical controllers, with the LIL dynamically mapping all communication channels involving the component being moved to updated mechanisms for communicating to the location of the new controller. This ultimately allows replacing physical controllers by replacement controllers of a different controller type without interrupting the industrial process.

In a preferred embodiment, the Location-Independence Layer LIL is also responsible for scheduling the execution of different processes or tasks of the software components. In industrial processes, scheduling generally follows a fixed cyclic order determined by the dependencies between the software applications and respective of a control flow and data flow between the different components. Hence a serial schedule, according to which the different processes or tasks are executed, may be established initially before operation starts. Nevertheless, whenever a component is added to, removed from, or updated in the system, the schedule is recalculated. In each cycle, the LIL computes which components to execute and in which order, and triggers the execution accordingly. With the information about dependencies between components being part of the schedule rather than the components, the latter can be independently developed and tested.

In another preferred embodiment, the automation system architecture further comprises an independent lower or Hardware Abstraction Layer (HAL) providing a generic interface between any upper-level software and the computing hardware of the controllers. In the present context, the HAL is a piece of software that runs on a hardware-specific operating system or platform, and absorbs any information specific to the piece of hardware used. In other words, the HAL masks any hardware specific aspects from the Location-Independence Layer LIL, and enables instantiating LILs of a single class on all the controllers .

In an advantageous embodiment and via their respective instances of the Location-Independence Layer LIL, any two controllers are adapted to transfer application-level processes or tasks at run-time, i.e. during execution of the latter. In particular, the two controllers are coordinated to the extent that responsibility for a single task of the application-level software component may be handed over from one controller to the other during execution of the task itself. In other words, at any moment the execution of a particular task on the first controller may be terminated with step N and subsequently continue on the second controller with step N+1. In case the components that are handed over have a state such as e.g. local variables, the LIL transmits the state during the handover to ensure that operation continues seamlessly.

Even the most complex industrial process control application or system is ultimately based on well-established individual control loops as exemplary application-level tasks. In the case of linear feedback systems, a control loop, including sensors, control algorithms and actuators, is arranged and configured in order to regulate a particular process variable at a set point or reference value by applying, to the process, a control action based on a feedback elaborated by the control algorithms and exploiting sensed values of selected process variables. Proportional-Integral-Differential (PID) control algorithms are used for the control of almost all control loops, and are also the basis for many advanced control algorithms and strategies.

Accordingly, in the above advantageous embodiment, the LIL is adapted to perform a cross-controller transfer of an active control-loop, i.e. a transfer of the responsibility over a next step to be executed in the control loop from the first to the second controller. To this effect the control loop to be transferred is first duplicated or cloned to the second controller. A smooth transition between controllers is then supported by maintaining real-time aspects of communication and computation when transmitting the changeover data over the automation communication network.

The industrial automation system, as a consequence of one or several of the foregoing features, is able to dynamically and seamlessly transfer control applications between available controllers while the plant is in operation. Such a flexible task-to-execution-node allocation is a basis for dynamically moving entire application level control functionality between physical hardware nodes at run-time. Duplication or triplication of processes or tasks provides for increased hot-hot redundancy, or ultimately enables exchanging or at least reconfiguring, via a simple change of system identity (IP address) or CPU related settings, any controller temporarily relieved of all control tasks.

Finally, the Location-Independence Layer LIL is adapted to perform load balancing among the controllers. As the allocation of a particular application-level software component to a particular piece of hardware, or CPU, is not of concern, various criteria for dynamically and flexibly assigning tasks to nodes may be considered. In particular, applications and tasks can be dynamically moved around to accommodate load and capacity changes and optimally use different types of hardware devices that may be available in a heterogeneous solution. Hence, for the purpose of load balancing, but also in order to increase fault-tolerance or to accommodate hardware topology changes, and even without the intent to replace a piece of hardware, active control loop transfer may be employed. Likewise, dynamic trade-offs can be made between resources available for performance and for redundancy, e.g. allocating certain resources for hot standbys for essential services and others for cold standbys for best-effort redundancy of optional services.

Preferably, a supervisory component is provided which tracks the utilization of computing resources such as storage space or CPU time across a network of physical computing nodes and which detects shortages and failures as well as spare capacities of computing resources on individual hardware nodes. A management component is then able to dynamically move application level software components between physical hardware nodes maximizing the utilization of the entire networks computing resources.

Advantageously, one of the controllers is a general purpose computer, i.e. a standard PC that cost-efficiently meets the requirements of industrial automation systems in terms of reliability and speed. Real-time aspects of communication and computation are maintained when running and transferring the application-level control tasks involving PC-like hardware devices.

### DETAILED DESCRIPTION OF PREFERRED EMBODIMENTS

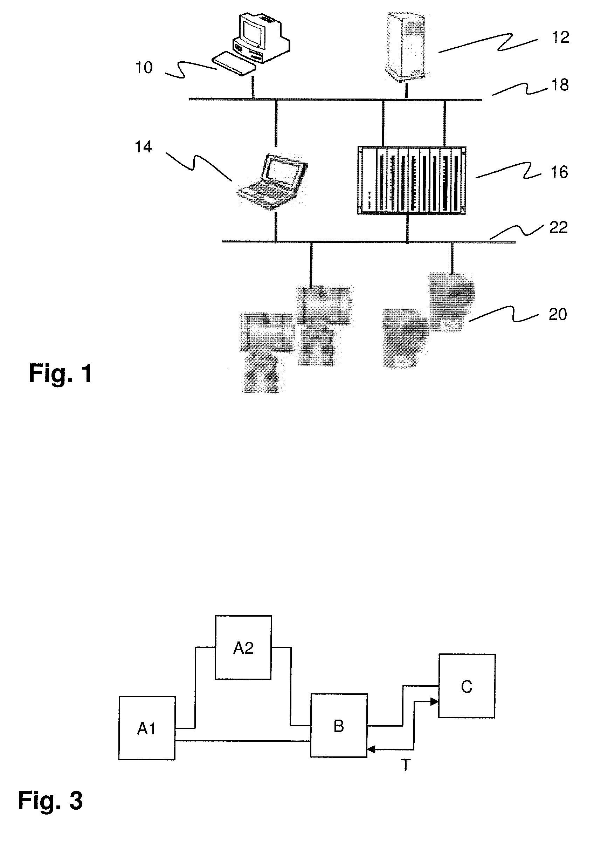

Fig.1 is a block diagram of an excerpt of an industrial automation system in accordance with one embodiment of the invention. The industrial automation system includes station computer / operator workplace 10, server 12, control devices 14, 16 as exemplary controllers interconnected via an automation communication system 18 such as a Wide Area Network (WAN). Field devices 20 or process control devices, for example flow transmitters and valves, are connected to the control devices 14, 16 via a field bus 22 such as PROFINET. The automation communication system 18 and the field bus 22 may alternatively be merged into a single communication system such as a single wireless interconnection of all controllers and/or field devices.

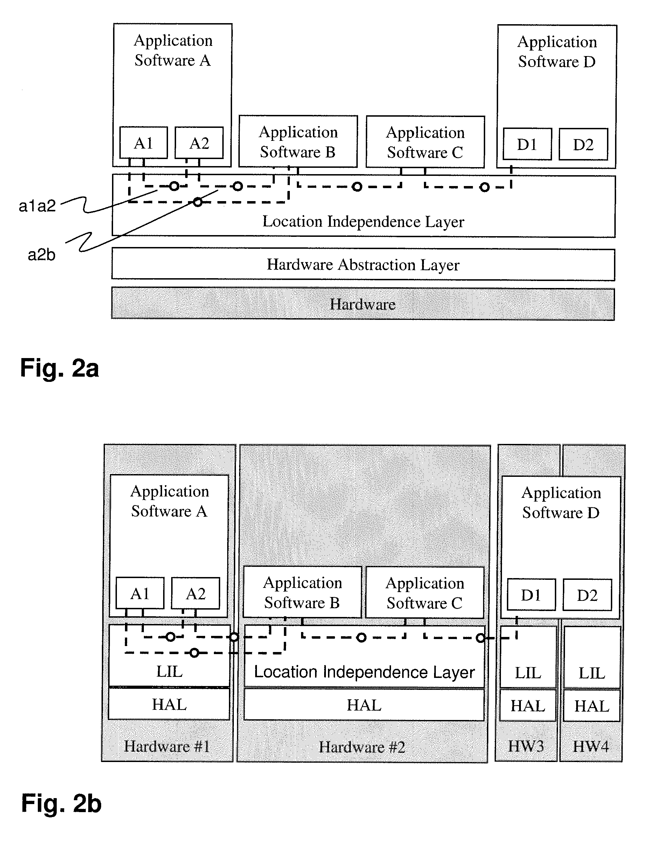

Figs.2a and 2b depict the architecture of an industrial automation system in accordance with one embodiment of the invention. Fig.2a presents the *logical* view of the system, whereas Fig.2b shows an example of a *physical* view. According to Fig.2a, different software applications A, B, C, and D are executed on some hardware. Some of these applications, or some of their respective components A1, A2, B, C, D1, D2, communicate via logical communication channels ala2, a2b, alb, bc, cd1, all depicted as bold-type broken lines. According to the physical view of Fig.2b, the applications are executed on four physical control devices denoted "Hardware #i". As can be seen, applications and their components can be flexibly mapped to hardware: A 1-to-1 mapping (Application A), a many-to-1 mapping (Applications B and C), and a 1-to-many-mapping (D). Many-to-many mappings are also possible.

In Figs.2 there are two abstraction layers between the hardware and the software applications, i.e. the hardware abstraction layer (HAL) and the location independence layer (LIL). Each piece of hardware executes a separate instance of hardware abstraction layer (HAL) and location independence layer (LIL). The LIL also manages or schedules the access of the application-level software components to lower-level software and resources. Lower-level software, or middleware, provides housekeeping or supporting functions to enable the application-level software components, such as inter-controller communication, data storage and retrieval, and hardware diagnostics.

Fig.3 depicts an exemplary function plan specifying the control-flow dependencies between the components A1, A2, B, and C. From such a control flow diagram the order in which the software components A1, A2, B and C are executed can be automatically computed. Read from left to right, each cycle starts at A1. After completion of component A1, a token is passed to A2 and to B. After completion of the processes or tasks of A2, A2 passes a token to B. After B has received the tokens from A1 and A2, its execution is triggered in turn. Function plans can also comprise information about data flow. Fig.3 depicts exemplary data flow between components B and C. In addition to the unlabeled connector or edge, which denotes control flow, a second connector marked "T" symbolizes that data of some type T is transmitted across a channel connecting B and C.

Details may be found in the article "Dynamic Software Updates for Real-Time Systems", by Michael Wahler et al., Second ACM Workshop on Hot Topics in Software Upgrades, Orlando, FL, USA, 2009.

In order to further decouple controllers and application-level software components, data exchange between the latter is not based on communication-level addresses, but on application-level addresses or self-describing data being broadcast in the system. The self-describing data comprises tag/value pairs denoting the sender/receiver and indicating the application/payload data, e.g. a pressure sensor broadcast would comprise <source sensor tag id, pressure value>. In this case, there does not need to be a pre-configured dependency between sender and receiver nodes (logical or physical) and their location (logical or physical), which enables "intelligent" application-level components to make use of data dynamically available in the plant without specifically being configured for it. In other words, application task instances may listen to all "pressure" values independently of the controller on which they are executed.

## Claims

1. An industrial automation system for controlling an industrial process, the automation system comprising controllers (14, 16) of a first and of a second type and interconnected via a communication network (18) as well as software applications (A; B; C) providing control system functionality on behalf of the industrial process and being executed on the controllers, wherein the automation system implements a system architecture with
- the software applications consisting of one or more software components (A1, A2; B; C) that are separated in time and space from each other, and
- a Location Independence Layer LIL instantiated on all controllers (14, 16) and providing logical communication channels (ala2, a2b) as an exclusive means for data exchange between the software components.

2. The system according to claim 1, **characterized in that** the Location Independence Layer LIL provides for scheduling of software component execution.

3. The system according to claim 1, **characterized in that** the system architecture comprises a Hardware Abstraction Layer HAL for abstracting any hardware specific aspects from the Location-Independence Layer LIL.

4. The system according to claim 1, **characterized in that** the controllers are adapted to transfer active application-level processes or tasks from the first to the second controller.

5. The system according to claim 4, **characterized in that** the system is adapted to transfer an execution of an active application-level process or task from the first to the second controller in order to balance a computing load between the controllers.

6. The system according to claim 5, **characterized in that** the low-level software components are adapted to supervise the utilization of computing resources among the controllers .

7. The control system according to one of claims 1 to 6, **characterized in that** the first or second controller type is general purpose computer.
